# EUROPEAN PATENT APPLICATION

(11) **EP 0 746 997 A1**
(43) Date of publication of application: **11.12.1996**
(21) Application number: 95500079.9
(22) Date of filing: 06.06.1995
(51) Int. Cl.: A47J 9/00, G01F 19/00, A47G 21/04

(54) **Sliding ladle-carrying seals**

(71) Applicant: MUNDI-CLIP, S.L., E-03205 Elche (Alicante) (ES)
(72) Inventor: Lopez Gonzalez, Jose Maria, E-03205 Elche (Alicante) (ES)
(74) Representative: Perez Bonal, Bernardo

(57) **Abstract**

Besides the sliding seal upon edges of opened containers that are introduced in their slot function, they are simultaneously configured as the handles of ladles used to dispense the product contained therein, being all of them of the elastic seal type and fitted with a ladle located below and at an end thereof, so that the sealing function does not difficult the product dispensing function and vice versa.

## Description

### OBJECT OF THE INVENTION

These sliding seals, for containers made of different materials, are simultaneously configured as handles of ladles to dispense the product contained therein.

Made with different terminations, they have in common the feature of arranging the ladle below the seal and at an end thereof, so that the sealing function does not difficult the product dispensing function and vice versa.

Whereas the ladle and its connection to the sliding seal are conventional, the latter is made as an upper sealing system, fitted with a slot that runs along its corresponding upper running line, which is the one used to introduce therein the container cutting lips, so as to achieve its closure, helped by various introduction means, as per the finishing used.

### BACKGROUND OF THE INVENTION

Sliding seals are well known sealing means, so that depending on the various models they are used to seal organic body waste bags, in hospital care or by employees of companies engaged in external community services.

Others are used to seal bags or cartons of foodstuffs in liquid, dust or granulated format characterized in respect of all of them by the fact of being capable of undergoing a sliding motion, that is, of introducing the container lips at one of the ends of the seal and then, cause the latter item to advance by sliding it along the edges.

Some of the latter ones are configured so that they allow the introduction of thicker lips on the whole that the sealing slot, on the basis of a curved spout that, besides easing the engagement of both lips, does also allow that greater thickness thereof, without excessively forcing the sealing element in order to prevent it from breaking.

Even one of these seals is arranged so that a slot is incorporated, diametrically opposite and shorter than the previously described one, so as to be able to seal elbow cut containers, so that one of the slots seals one of the cuts and the other one the elbow of the first one.

Notwithstanding the foregoing, the applicant is not aware of the existence of sliding sealing elements accomplishing the double function of sliding seals and featuring a ladle to dispense the product contained inside the so sealed container.

### DESCRIPTION OF THE INVENTION

The invention object of this description consists of a family of sliding seals, to be used with containers with a certain degree of elasticity, of the type that may be given various uses and which sealing is required during non usage periods, made with various materials which, once cut, may join together their cutting edges so that a seal, either elastic or pressurized, keeps then joined together, characterized by the fact that these seals, in this case sliding, are simultaneously configured as the handles of a ladle used to dispense the product contained within the container.

This family of elastic sliding seals may be manufactured in different finishes and have in common the arrangement of the ladle in a location lower than the seal and located at an end thereof, so as to separate the sealing function from the product dispensing function.

The ladle may be manufactured using any conventional configuration and is joined peripherally to the sealing end, being fitted with a reinforcing flange, backing strip or similar part attached to the handle, which is defined either as a slide sealing supporting element, if arranged attached below the seal when the seal has a tubular shape, or else as a part of the seal, specifically one of its wings, which becomes the handle that joins the ladle, in the case of a sliding seal configured in the shape of a narrow core "U", as per the preferential examples described below.

The sliding seal is fitted at its upper area with a slot that runs along its corresponding upper line, in the case of the tubular sliding seal, or laterally arranged, in the case of the clip closing "U" shape, being this slot the one used to introduced therein the container cut off lips in order to achieve their closure, aided by different introduction means, such as slanted side cuts on the tubular shape body, cut off edges rounded and slightly further apart than the rest of the slot, as well as additional holding means, such as cuts diametrically opposite the tube end, for the simultaneous holding of elbow shaped configuration cut off edges.

### DRAWING DESCRIPTION

In order to complement the description being made and so as to aid a better comprehension of the characteristics of this invention, this patent specification encloses, as an integral part thereof, a set of drawings which, with merely illustrative and not limitative purposes, representing the following:
Figure 1 is a variant of the winged tubular seal, sliding and with a ladle fitted with a holding flange, further fitted with insertion means by way of a slanted side cut and rounded at its opposite end, and further fitted with a double slot to hold elbow cut ends.
Figure 2 is another variant of the non-winged tubular seal, sliding and with the ladle fitted with a holding reinforced elbow shaped backing strip, as well as the means to insert container edges through the rounding of its end opposite the ladle.
Figure 3 is another sealing variant, shaped as a sideways overturned "U" with wings very close at its free ends, clip shaped, one of which ends is joined as a handle to the ladle, also sliding and with the ladle fitted with a wing holding flange.
Figure 4 is a further sealing variant, with an irregular star shape, with one of its points arranged as two wings very close at their free ends, clip shaped, serving a ladle handle and flange, also with a sliding sealing configuration.

### PREFERRED EXECUTION OF THE INVENTION

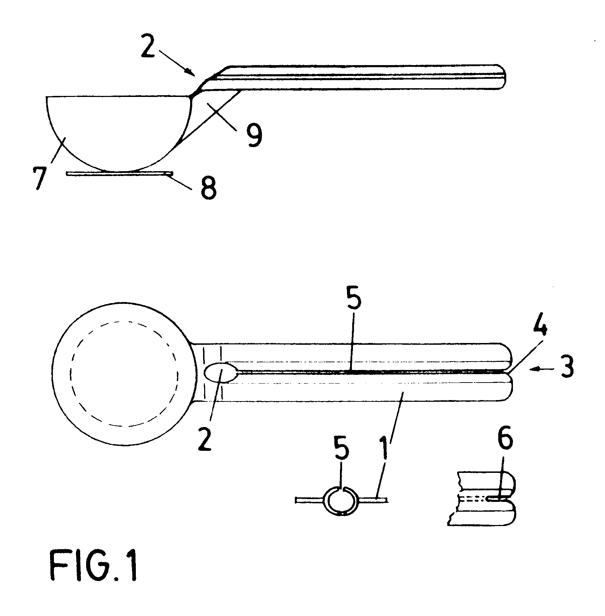

The execution advanced in figure 1 is configured by a tubular elastic seal, with wing shapes (1) that act as a handle and sliding configuration to seal elbowed edges, by way of their insertion either through its slanted side cut end (3), or through the opposite free end (3) rounded top (4) inside a slot (5) arranged in the direction of the ruling lines and a shorter one (6), diagonally opposite and located on the side opposite the ladle (7), with a base plate (8), which ladle is used to dispense products contained in the bag sealed by it, seal and ladle being joined by way of a lower flange (9), located in the direction of the slot and using up the slanted cut (2) to facilitate the insertion and handling of the ladle inside the container.

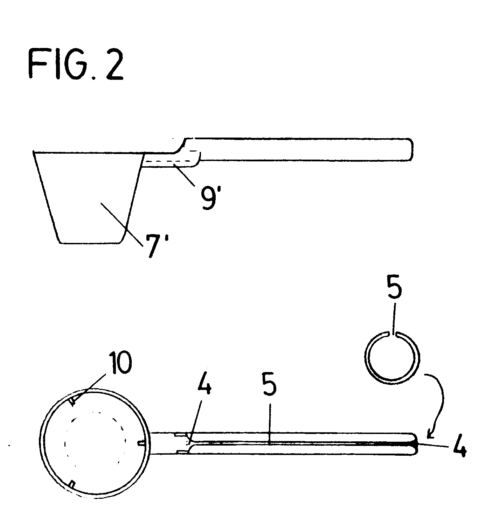

The execution advanced by figure 2 is configured by an equally tubular elastic seal, but without side wings and sliding to seal the edges of simple straight containers, by way of their introduction through any of its ends, fitted with rounded tops (4) into a slot arranged in the direction of the running lines and joined to the ladle (7'), with internal reinforcements (10), which ladle is used to dispense products from the bag that is seals, in a lower position and being seal and ladle joined by a backing strip (9') elbow shaped and reinforced located below the seal and in the direction of the slot.

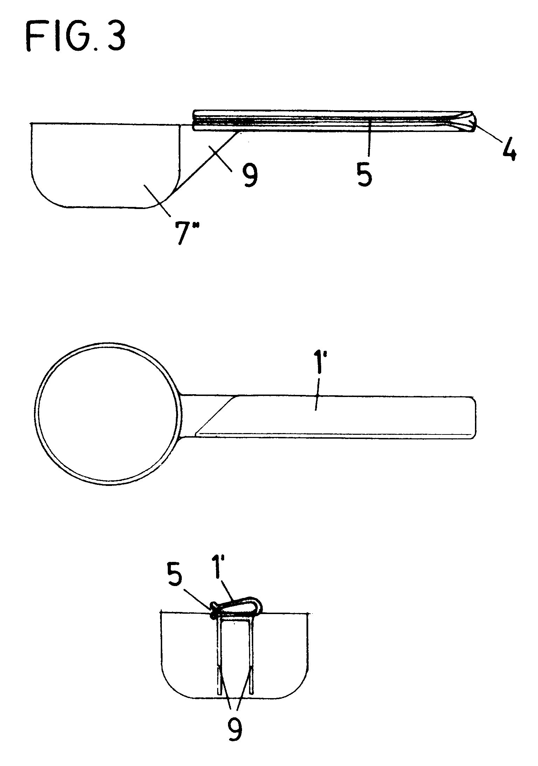

The execution proposed by figure 3 is configured by an elastic seal, shaped as a short cored and long winged (1') overturned "U", sliding to seal simple straight edges, by way of their introduction through its rounded top end (4) into a slot (5) configured by the approximation of the free edges of these wings, also rounded and where the ladle (7'') used to dispense the products of the bag that it seals is located in a lower position, being both seal and ladle joined to each other by way of flanges (9) located on the lower surface of the wing acting as a handle and orthogonally placed in respect of the slot.

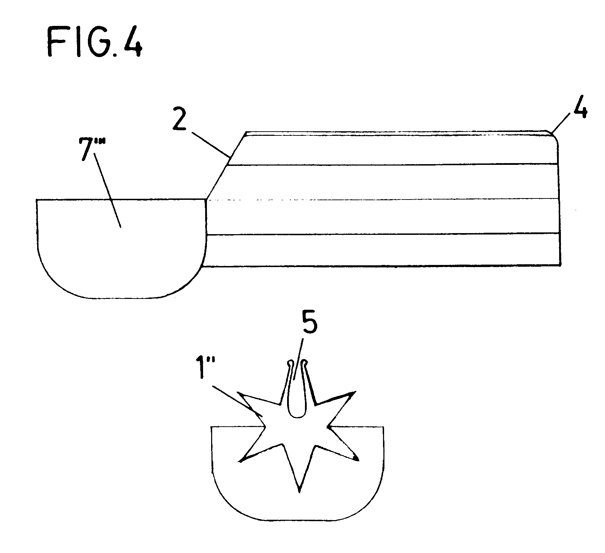

The execution illustrated in figure 4 is configured by an elastic seal, with an irregular six pointed (1'') star handle, the two opposite vertical star points being of a greater size and the upper one being configured as two cut off wings that near each other to close simple straight container edges, by way of their introduction through their rounded top end (4) into a slot (5) configured by the approximation of the free edges of these wings, also round and being the product dispensing ladle (7''') and to dispense products from the bag sealed by it, located on a lower position and being seal and ladle joined by way of the star points (1) making up the handle.

It is not considered necessary to extend this description any further to enable any expert in this art to understand the scope of the invention and the advantages derived from it.

The materials, shape, size and arrangement of the elements may be varied as long as that variation does not alter the essential features of the invention.

The terms in which this specification has been described must at all times be taken in a wide and non limitative sense.

## Claims

1. Sliding ladle carrying seals, of the elastically configured type with a lengthwise slot, to seal elbowed edges, by way of introducing them either through their slanted side cut end or through the opposite end, with a rounded apex within a slot arranged in the direction of the running lines and a shorter one, diagonally opposed and located in the opposite end, essentially characterized by the seal being fitted with diametrically opposed wings and, as a continuation of said slanted cut, feature below it a ladle used to dispense products from the bag that it seals, being seal and ladle joined to each other by way of a lower flange, arranged in the direction of the slot.

2. Sliding ladle carrying seals, as per the above claim, characterized by the seal itself acting as a handle and by having rounded apex ends on the slot and by the ladle having, or alternatively lacking, internal reinforcing ribs, as well as by the seal and ladle being joined to each other by way of an elbow shaped and reinforced backing strip located lower than the seal and in the direction of the slot.

3. Sliding ladle carrying seals, as per the first claim, characterized by acting as handle the wing of a "U" configuring the elastic seal, arranged overturned, with a short core and log wings, sliding and with a rounded slot apex configured by the approximation of the free ends of said wings, also rounded, and by the ladle used to dispense the products from the so sealed bag being located on a lower position and by the ladle and seal being joined to each other through, at least, a flange located in the lower surface of the wing acting as a handle and arranged orthogonally in respect of the slot.

4. Sliding ladle carrying seals, as per the first claim, characterized by acting as a handle an irregular six pointed star (1''), the two opposite vertical star points being of a greater size and the upper one being configured as two cut off wings that near each other to close simple straight container edges, by way of their introduction through their round top end (4) into a slot (5) configured by the approximation of the free edges of these wings, also rounded and being the product dispensing ladle (7''') to dispense products from the bag sealed by it, located on a lower position and being seal and ladle joined by way of the star points (1) making up the handle.
